# EUROPEAN PATENT APPLICATION

(11) **EP 3 620 915 A1**
(43) Date of publication of application: **11.03.2020**
(21) Application number: 19187262.1
(22) Date of filing: 19.07.2019
(51) Int. Cl.: G06F 8/65, H04L 29/08, H04M 1/725

(54) **INFORMATION UPGRADING METHOD, APPARATUS AND STORAGE MEDIUM FOR AUTOMATIC DRIVING VEHICLE**

(30) Priority: 07.09.2018 CN 201811042242
(71) Applicant: Baidu Online Network Technology (Beijing) Co., Ltd., Beijing 100085 (CN)
(72) Inventor: CUI, Yue, BEIJING, HAIDIAN DISTRICT 100085 (CN); ZHANG, Yaling, BEIJING, HAIDIAN DISTRICT 100085 (CN); TAO, Ji, BEIJING, HAIDIAN DISTRICT 100085 (CN)
(74) Representative: Studio Torta S.p.A.

(57) **Abstract**

The present application provides an information upgrading method, an apparatus, and a storage medium for an automatic driving vehicle, where the method includes: determining a target in-vehicle client to be upgraded and acquiring target upgrade information; and further, transmitting an upgrade indication message carrying the target upgrade information to the target in-vehicle client by an over-the-air, OTA, technology, so that the target in-vehicle client performs an upgrade according to the target upgrade information. It can be seen that the effective information upgrading of the in-vehicle client in the automatic driving vehicle is achieved, and the user experience of the in-vehicle client and/or the automatic driving vehicle is improved.

## Description

### TECHNICAL FIELD

The present application relates to the field of automatic driving technologies, and in particular, to an information upgrading method, an apparatus, and a storage medium for an automatic driving vehicle.

### BACKGROUND

With the development of information technologies, there is more and more research on intelligent vehicles. The intelligent vehicle research mainly direct to automatic driving vehicles.

Usually, a variety of intelligent hardware and software are installed in an automatic driving vehicle to achieve safe automatic driving. With the development of automatic driving vehicle technologies, information such as software, firmware, parameters, and/or data in the automatic driving vehicle often needs to be upgraded and updated.

Therefore, how to effectively upgrade and update the information such as software, firmware, parameters and/or data in the automatic driving vehicle is a technical problem to be solved.

### SUMMARY

The present application provides an information upgrading method, an apparatus, and a storage medium for an automatic driving vehicle, which realizes an effective upgrade of information in an in-vehicle client in an autonomous driving vehicle.

In a first aspect, the present application provides an information upgrading method for an automatic driving vehicle, including:
determining a target in-vehicle client to be upgraded and acquiring target upgrade information; and
transmitting an upgrade indication message to the target in-vehicle client by an over-the-air, OTA, technology, where the upgrade indication message includes the target upgrade information, so that the target in-vehicle client performs an upgrade according to the target upgrade information.

In a possible implementation, the determining a target in-vehicle client to be upgraded and acquiring target upgrade information includes:
when an addition of new relationship information into pre-stored relationship information is detected, determining that new upgrade information is the target upgrade information, where the pre-stored relationship information includes a mapping relationship between different upgrade identifier information and different upgrade information, and the new relationship information includes a mapping relationship between new upgrade identifier information and the new upgrade information; and
determining an in-vehicle client corresponding to the new upgrade identifier information as the target in-vehicle client according to a stored mapping relationship between the upgrade identifier information and an in-vehicle client.

In a possible implementation, the transmitting an upgrade indication message to the target in-vehicle client by an over-the-air, OTA, technology includes:
determining whether the determined target upgrade information and the target in-vehicle client are correct; and
if it is determined that the target upgrade information and the target in-vehicle client are correct, transmitting the upgrade indication message to the target in-vehicle client by the over-the-air, OTA, technology.

In a possible implementation, the determining a target in-vehicle client to be upgraded and acquiring target upgrade information includes:
receiving an upgrade request message transmitted by the target in-vehicle client, where the upgrade request message includes: identifier information of the target in-vehicle client and identifier information of requested upgrade information; and
determining the target in-vehicle client according to the identifier information of the target in-vehicle client, and determining the target upgrade information according to the identifier information of the requested upgrade information.

In a possible implementation, the determining the target upgrade information according to the identifier information of the requested upgrade information includes:
determining, according to pre-stored relationship information, whether upgrade information corresponding to the identifier information of the requested upgrade information exists, where the pre-stored relationship information includes a mapping relationship between different upgrade identifier information and different upgrade information; and
if the upgrade information corresponding to the identifier information of the requested upgrade information exists, determining that the upgrade information corresponding to the identifier information of the requested upgrade information is the target upgrade information.

In a possible implementation, if the upgrade request message further includes target user identity information, the determining the target in-vehicle client according to the identifier information of the target in-vehicle client, and determining the target upgrade information according to the identifier information of the requested upgrade information includes:
determining, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determining the target in-vehicle client according to the identifier information of the target in-vehicle client, and determining the target upgrade information according to the identifier information of the requested upgrade information.

In the embodiment of the information upgrading method for an automatic driving vehicle provided by the first aspect, by determining a target in-vehicle client to be upgraded and acquiring target upgrade information, and transmitting an upgrade indication message to the target in-vehicle client by an over-the-air, OTA, technology, where the upgrade indication message includes the target upgrade information, the target in-vehicle client performs an upgrade according to the target upgrade information. It can be seen that the effective information upgrading of the in-vehicle client in the automatic driving vehicle is achieved, and the user experience of the in-vehicle client and/or the automatic driving vehicle is improved.

In a second aspect, the present application provides an information upgrading method for an automatic driving vehicle, including:
receiving an upgrade indication message transmitted by an in-vehicle server through an over-the-air, OTA, technology, where the upgrade indication message includes target upgrade information; and
performing an upgrade according to the target upgrade information.

In a possible implementation, the performing an upgrade according to the target upgrade information includes:
determining whether it is necessary to perform an upgrade according to the target upgrade information; and
if it is determined that it is necessary to perform the upgrade, performing the upgrade according to the target upgrade information.

In a possible implementation, before the receiving an upgrade indication message transmitted by an in-vehicle server through an over-the-air, OTA, technology, the method further includes:
transmitting an upgrade request message to the in-vehicle server, where the upgrade request message includes: identifier information of a target in-vehicle client and identifier information of requested upgrade information.

In the embodiment of the information upgrading method for an automatic driving vehicle provided by the second aspect, an upgrade indication message transmitted by an in-vehicle server through an over-the-air, OTA, technology is received; and further, an upgrade is performed according to the target upgrade information. It can be seen that the effective information upgrading of the in-vehicle client in the automatic driving vehicle is achieved, and the user experience of the in-vehicle client and/or the automatic driving vehicle is improved.

In a third aspect, the present application provides an information upgrading apparatus for an automatic driving vehicle, including:
a determining module, configured to determine a target in-vehicle client to be upgraded and acquire target upgrade information; and
a transmitting module, configured to transmit an upgrade indication message to the target in-vehicle client by an over-the-air, OTA, technology, where the upgrade indication message includes the target upgrade information, so that the target in-vehicle client performs an upgrade according to the target upgrade information.

In a possible implementation, the determining module is specifically configured to:
when an addition of new relationship information into pre-stored relationship information is detected, determine that new upgrade information is the target upgrade information, where the pre-stored relationship information includes a mapping relationship between different upgrade identifier information and different upgrade information, and the new relationship information includes a mapping relationship between new upgrade identifier information and the new upgrade information; and
determine an in-vehicle client corresponding to the new upgrade identifier information as the target in-vehicle client according to a stored mapping relationship between the upgrade identifier information and an in-vehicle client.

In a possible implementation, the transmitting module is specifically configured to:
determine whether the determined target upgrade information and the target in-vehicle client are correct; and
if it is determined that the target upgrade information and the target in-vehicle client are correct, transmit the upgrade indication message to the target in-vehicle client by the over-the-air, OTA, technology.

In a possible implementation, the determining module includes:
a receiving unit, configured to receive an upgrade request message transmitted by the target in-vehicle client, where the upgrade request message includes identifier information of the target in-vehicle client and identifier information of requested upgrade information; and
a determining unit, configured to determine the target in-vehicle client according to the identifier information of the target in-vehicle client, and determine the target upgrade information according to the identifier information of the requested upgrade information.

In a possible implementation, the determining unit is specifically configured to:
determine, according to pre-stored relationship information, whether upgrade information corresponding to the identifier information of the requested upgrade information exists, where the pre-stored relationship information includes a mapping relationship between different upgrade identifier information and different upgrade information; and
if the upgrade information corresponding to the identifier information of the requested upgrade information exists, determine that the upgrade information corresponding to the identifier information of the requested upgrade information is the target upgrade information.

In a possible implementation, if the upgrade request message further includes target user identity information, the determining unit is specifically configured to:
determine, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determine the target in-vehicle client according to the identifier information of the target in-vehicle client, and determine the target upgrade information according to the identifier information of the requested upgrade information.

In a fourth aspect, the present application provides an information upgrading apparatus for an automatic driving vehicle, including:
a receiving module, configured to receive an upgrade indication message transmitted by an in-vehicle server through an over-the-air, OTA, technology, where the upgrade indication message includes target upgrade information; and
an upgrading module, configured to perform an upgrade according to the target upgrade information.

In a possible implementation, the upgrading module is specifically configured to:
determine whether it is necessary to perform an upgrade according to the target upgrade information; and
if it is determined that it is necessary to perform the upgrade, perform the upgrade according to the target upgrade information.

In a possible implementation, the apparatus further includes:
a transmitting module, configured to transmit an upgrade request message to the in-vehicle server, where the upgrade request message includes identifier information of a target in-vehicle client and identifier information of requested upgrade information.

In a fifth aspect, the present application provides an in-vehicle server, including: a memory, a processor, and a transceiver;
the memory is configured to store a program instruction; and
the processor is configured to invoke the program instruction stored in the memory to implement the following steps:
determining a target in-vehicle client to be upgraded and acquiring target upgrade information; and
controlling the transceiver to transmit an upgrade indication message to the target in-vehicle client by an over-the-air, OTA, technology, where the upgrade indication message includes the target upgrade information, so that the target in-vehicle client performs an upgrade according to the target upgrade information.

In a possible implementation, the processor is specifically configured to:
when an addition of new relationship information into pre-stored relationship information is detected, determine that new upgrade information is the target upgrade information, where the pre-stored relationship information includes a mapping relationship between different upgrade identifier information and different upgrade information, and the new relationship information includes a mapping relationship between new upgrade identifier information and the new upgrade information; and
determine an in-vehicle client corresponding to the new upgrade identifier information as the target in-vehicle client according to a stored mapping relationship between the upgrade identifier information and an in-vehicle client.

In a possible implementation, the processor is specifically configured to: determine whether the determined target upgrade information and the target in-vehicle client are correct.

If the processor determines that the target upgrade information and the target in-vehicle client are correct, the transceiver is specifically configured to: transmit the upgrade indication message to the target in-vehicle client by the over-the-air, OTA, technology.

In a possible implementation, the transceiver is further configured to receive an upgrade request message transmitted by the target in-vehicle client, where the upgrade request message includes: identifier information of the target in-vehicle client and identifier information of requested upgrade information; and
the processor is specifically configured to: determine the target in-vehicle client according to the identifier information of the target in-vehicle client, and determine the target upgrade information according to the identifier information of the requested upgrade information.

In a possible implementation, the processor is specifically configured to:
determine, according to pre-stored relationship information, whether upgrade information corresponding to the identifier information of the requested upgrade information exists, where the pre-stored relationship information includes a mapping relationship between different upgrade identifier information and different upgrade information; and
if the upgrade information corresponding to the identifier information of the requested upgrade information exists, determine that the upgrade information corresponding to the identifier information of the requested upgrade information is the target upgrade information.

In a possible implementation, if the upgrade request message further includes target user identity information, the processor is specifically configured to:
determine, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determine the target in-vehicle client according to the identifier information of the target in-vehicle client, and determine the target upgrade information according to the identifier information of the requested upgrade information.

In a sixth aspect, the present application provides an in-vehicle client, where the in-vehicle client is a target in-vehicle client, and the target in-vehicle client includes: a memory, a processor, and a transceiver;
the memory is configured to store a program instruction; and
the processor is configured to invoke the program instruction stored in the memory to implement the following steps:
controlling the transceiver to receive an upgrade indication message transmitted by an in-vehicle server through an over-the-air, OTA, technology; wherein the upgrade indication message includes target upgrade information; and
performing an upgrade according to the target upgrade information.

In a possible implementation, the processor is specifically configured to:
determine whether it is necessary to perform an upgrade according to the target upgrade information; and
if it is determined that it is necessary to perform the upgrade, performing the upgrade according to the target upgrade information.

In a possible implementation, the transceiver is further configured to transmit an upgrade request message to the in-vehicle server, where the upgrade request message includes: identifier information of the target in-vehicle client and identifier information of requested upgrade information.

In a seventh aspect, the present application provides a computer readable storage medium storing a computer program that causes an in-vehicle server to perform the method of any implementations of the first aspect.

In an eighth aspect, the present application provides a computer readable storage medium storing a computer program that causes an in-vehicle client to perform the method of any implementations of the second aspect.

### BRIEF DESCRIPTION OF THE DRAWINGS

In order to more clearly illustrate the technical solutions in the embodiments of the present application or in the prior art, the drawings used in the embodiments or the prior art description will be briefly described below. Obviously, the drawings in the following description illustrate some embodiments of the present application, and other drawings can be obtained according to the drawings without any creative efforts for those skilled in the art.
FIG. 1 is a schematic diagram of an application scenario according to an embodiment of the present application;
FIG. 2 is a schematic flowchart diagram of an information upgrading method for an automatic driving vehicle according to an embodiment of the present application;
FIG. 3 is a schematic flowchart diagram of an information upgrading method for an automatic driving vehicle according to another embodiment of the present application;
FIG. 4 is a schematic flowchart diagram of an information upgrading method for an automatic driving vehicle according to another embodiment of the present application;
FIG. 5 is a schematic flowchart diagram of an information upgrading method for an automatic driving vehicle according to another embodiment of the present application;
FIG. 6 is a schematic structural diagram of an information upgrading apparatus for an automatic driving vehicle according to an embodiment of the present disclosure;
FIG. 7 is a schematic structural diagram of an information upgrading apparatus for an automatic driving vehicle according to another embodiment of the present application;
FIG. 8 is a schematic structural diagram of an in-vehicle server according to an embodiment of the present application; and
FIG. 9 is a schematic structural diagram of an in-vehicle client according to an embodiment of the present application.

### DETAILED DESCRIPTION OF THE EMBODIMENTS

First, an application scenario of the embodiments of the present application and some of the vocabulary involved are described.

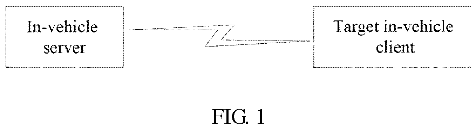

FIG. 1 is a schematic diagram of an application scenario according to an embodiment of the present application. As shown in FIG. 1, when an in-vehicle server determines that it is necessary to upgrade information (such as software information, firmware information, parameter information, and/or data information, etc.) in a target in-vehicle client, or when the target in-vehicle client determines that it is necessary to upgrade the information, a message interaction between the in-vehicle server and the target in-vehicle client is performed to upgrade the target in-vehicle client. In the embodiments of the present application, a description is mainly made on a process of the interaction between the in-vehicle server and the target in-vehicle client; of course, the embodiments of the present application is also applicable to other application scenarios, which is not limited in the embodiments of the present application.

Upgrade information or target upgrade information involved in the embodiments of the present application may include, but is not limited to, at least one of the following: software information, firmware information, parameter information, or data information.

Illustratively, if the target upgrade information includes the software information, a corresponding information upgrade manner of the automatic driving vehicle includes performing an upgrade by a Software Over-the-Air, SOTA, Technology; if the target upgrade information includes the firmware information, the corresponding information upgrade manner of the automatic driving vehicle includes performing an upgrade by a Firmware Over-the-Air, FOTA, Technology; if the target upgrade information includes the parameter information, the corresponding information upgrade manner of the automatic driving vehicle includes performing an upgrade by a Configuration Over-the-Air, COTA, Technology; if the target upgrade information includes the data information, the corresponding information upgrade manner of the automatic driving vehicle includes performing an upgrade by a Data Over-the-Air, DOTA, Technology.

Pre-stored relationship information involved in the embodiments of the present application includes a mapping relationship between different upgrade identifier information and different upgrade information. Optionally, the upgrade identifier information is used to uniquely identify its corresponding upgrade information. For example, the pre-stored relationship information includes: a mapping relationship between upgrade identifier information 1 and upgrade information 1, a mapping relationship between upgrade identifier information 2 and upgrade information 2, and a mapping relationship between upgrade identifier information 3 and upgrade information 3.

A mapping relationship between the upgrade identifier information and the in-vehicle client involved in the embodiments of the present application may include a mapping relationship between different upgrade identifier information and different in-vehicle clients. For example, the mapping relationship between the upgrade identifier information and the in-vehicle client may include: a mapping relationship between the upgrade identifier information 1 and both in-vehicle client 1 and in-vehicle client 2 (i.e., the in-vehicle client 1 and the in-vehicle client 2 both download the upgrade information 1 corresponding to the upgrade identifier information 1), a mapping relationship between the upgrade identifier information 2 and the in-vehicle client 1 (i.e., the in-vehicle client 1 downloads the upgrade information 2 corresponding to the upgrade identifier information 2), and a mapping relationship between the upgrade identifier information 3 and in-vehicle client 3 (i.e., the in-vehicle client 3 downloads the upgrade information 3 corresponding to the upgrade identifier information 3).

A mapping relationship between user identity information and the in-vehicle client involved in the embodiments of the present application may include a mapping relationship between different user identity information and different in-vehicle clients. For example, the mapping relationship between the user identity information and the in-vehicle client may include: a mapping relationship between both user identity information 1 and user identity information 2 and the in-vehicle client 1 (i.e., the user identity information 1 and the user identity information 2 are both legal user identity information of the in-vehicle client 1), a mapping relationship between user identity information 3 and the in-vehicle client 2 (i.e., the user identity information 3 is legal user identity information of the in-vehicle client 2), and a mapping relationship between user identity information 4 and both the in-vehicle client 3 and the in-vehicle client 4 (i.e., the user identity information 4 is legal user identity information of the in-vehicle client 3 and the in-vehicle client 4).

In the information upgrading method, the apparatus, and the storage medium for an automatic driving vehicle provided by the embodiments of the present application, the in-vehicle server determines a target in-vehicle client to be upgraded and acquires target upgrade information; further, the in-vehicle server transmits an upgrade indication message carrying the target upgrade indication information to the target in-vehicle client by an over-the-air, OTA, technology, so that the target in-vehicle client performs an upgrade according to the target upgrade information. It can be seen that the effective information upgrading of the in-vehicle client in the automatic driving vehicle is achieved, and the user experience of the in-vehicle client and/or the automatic driving vehicle is improved.

The technical solutions of the present application and how the technical solutions of the present application solve the above technical problems are described in detail in the following specific embodiments. The following specific embodiments may be combined with each other, and the same or similar concepts or processes may not be described in some embodiments.

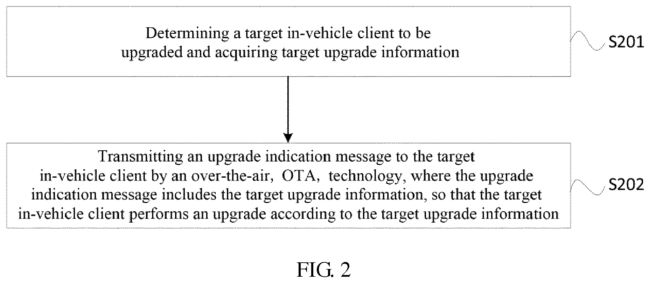

FIG. 2 is a schematic flowchart diagram of an information upgrading method for an automatic driving vehicle according to an embodiment of the present application. An executive body of this embodiment may be an in-vehicle server or an information upgrading apparatus for an automatic driving vehicle in an in-vehicle server and the apparatus may be implemented by software and/or hardware (for convenience of description, this embodiment is illustrated by taking the executive body being an in-vehicle server as an example). As shown in FIG. 2, the information upgrading method for an automatic driving vehicle provided in this embodiment may include:
Step S201: determining a target in-vehicle client to be upgraded and acquiring target upgrade information.

In this step, the in-vehicle server first determines the target in-vehicle client to be upgraded and the target upgrade information that needs to be transmitted to the target in-vehicle client, so that the target in-vehicle client performs an upgrade according to the target upgrade information.

In the embodiment of the present application, an implementable manner of step S201 can be at least as follows.

A first possible implementation is: when an addition of new relationship information into pre-stored relationship information is detected, determining that new upgrade information is the target upgrade information, where the pre-stored relationship information includes a mapping relationship between different upgrade identifier information and different upgrade information, and the new relationship information includes a mapping relationship between new upgrade identifier information and the new upgrade information; and determining an in-vehicle client corresponding to the new upgrade identifier information as the target in-vehicle client according to a stored mapping relationship between the upgrade identifier information and an in-vehicle client.

In the embodiment of the present application, when any upgrade information is added to the in-vehicle server, the in-vehicle server stores a mapping relationship between the upgrade information and its corresponding upgrade identifier information to facilitate management of the upgrade information.

Similarly, in order to facilitate the management of the in-vehicle client, in the embodiment of the present application, when the in-vehicle server transmits any upgrade information to the in-vehicle client, the in-vehicle server stores a mapping relationship between the upgrade identifier information corresponding to the upgrade information and the in-vehicle client.

In this implementation, a process of information upgrading is initiated by the in-vehicle server. Illustratively, when the in-vehicle server detects that the new relationship information is added into the pre-stored relationship information (the new relationship information includes a mapping relationship between the new upgrade identifier information and the new upgrade information), the new upgrade information is determined to be the target upgrade information. For example, it is assumed that a historical version of an application program A is version 1.1, and the pre-stored relationship information includes: a mapping relationship between an upgrade identifier 1.1A and upgrade information 1.lA; when the server detects that a mapping relationship between upgrade identifier 1.2A and upgrade information 1.2A is added into the pre-stored relationship information (i.e., the new upgrade information, equivalently indicates that the application program A has an updated version 1.2), the in-vehicle server determines that the new upgrade information (such as the upgrade information 1.2A) in the new relationship information is the target upgrade information.

Further, the in-vehicle server determines an in-vehicle client corresponding to the new upgrade identifier information as the target in-vehicle client according to the stored mapping relationship between the upgrade identifier information and the in-vehicle client. It should be noted that the in-vehicle client corresponding to the new upgrade identifier information in this embodiment of the present application may refer to an in-vehicle client corresponding to the lower-version upgrade identifier information that the new upgrade identifier information in the mapping relationship between the upgrade identifier information and the in-vehicle client corresponds to.

For example, it is assumed that the mapping relationship between the upgrade identifier information and the in-vehicle client includes: a mapping relationship between the upgrade identifier 1.1A and the in-vehicle client 1 (i.e., the historical version of the application program A in the in-vehicle client 1 is version 1.1), and the in-vehicle server can determine, according to the mapping relationship between the upgrade identifier 1.1A and the in-vehicle client 1, that the in-vehicle client corresponding to the new upgrade identifier information (for example, the upgrade identifier 1.2A) can be: the in-vehicle client (for example, the in-vehicle client 1) corresponding to the lower-version upgrade identifier information (for example, the upgrade identifier 1.1A) that the new upgrade identifier information (for example, the upgrade identifier 1.2A) corresponds to, so as to upgrade the application program A in the in-vehicle client 1.

In this implementation, the in-vehicle server determines the target upgrade information and the target in-vehicle client when detecting that the new relationship information is added into the pre-stored relationship information, thereby actively initiating an information upgrade for the target in-vehicle client.

A second possible implementation is: receiving an upgrade request message transmitted by the target in-vehicle client, where the upgrade request message includes: identifier information of the target in-vehicle client and identifier information of requested upgrade information; and determining the target in-vehicle client according to the identifier information of the in-vehicle client and determining the target upgrade information according to the identifier information of the requested upgrade information.

In this implementation, the process of information upgrading is initiated by the target in-vehicle client. Illustratively, the in-vehicle server determines the target in-vehicle client according to the identifier information of the target in-vehicle client and determines the target upgrade information according to the identifier information of the requested upgrade information when receiving the upgrade request message transmitted by the target in-vehicle client (which may include, but not limited to, the identifier information of the target in-vehicle client and the identifier information of the requested upgrade information).

Illustratively, the in-vehicle server may determine, according to pre-stored relationship information, whether upgrade information corresponding to the identifier information of the requested upgrade information exists; and if the upgrade information corresponding to the identifier information of the requested upgrade information exists, the in-vehicle server determines that the upgrade information corresponding to the identifier information of the requested upgrade information is the target upgrade information.

It should be noted that the upgrade information corresponding to the identifier information of the requested upgrade information involved in the embodiment of the present application may refer to the upgrade information corresponding to the identifier information of the requested upgrade information in the pre-stored relationship information, or may also be the higher-version upgrade information corresponding to the identifier information of the requested upgrade information in the pre-stored relationship information.

For example, it is assumed that the pre-stored relationship information includes the mapping relationship between the upgrade identifier 1.1A and the upgrade information 1.1 A, and the identifier information of the requested upgrade information is 1.1A, thus the in-vehicle server determines that the upgrade information (for example, the upgrade information 1.1A) corresponding to the identifier information (for example, 1.1A) of the requested upgrade information is the target upgrade information, according to the pre-stored relationship information.

For another example, it is assumed that the pre-stored relationship information includes: the mapping relationship between the upgrade identifier 1.1A and the upgrade information 1.1A, and the mapping relationship between the upgrade identifier 1.2A and the upgrade information 1.2A, and the identifier information of the requested upgrade information is 1.1A, thus the in-vehicle server determines, according to the pre-stored relationship information, the upgrade information corresponding to the identifier information (for example, 1.1A) of the requested upgrade information, i.e., the higher-version upgrade information corresponding to the identifier information of the requested upgrade information, for example the upgrade information 1.2A, is the target upgrade information.

In order to prevent an illegal user of the target in-vehicle client from upgrading the target in-vehicle client, in the embodiment of the present application, if the upgrade request message further includes target user identity information, the in-vehicle server determines, according to a stored mapping relationship between user identity information and the in-vehicle client, whether the target user identity information belongs to legal user identity information corresponding to the target in-vehicle client; and further, if determining that the target user identity information belongs to the legal user identity information corresponding to the target in-vehicle client, the in-vehicle server determines the target in-vehicle client according to the identifier information of the target in-vehicle client, and determines the target upgrade information according to the identifier information of the requested upgrade information; and if determining that the target user identity information does not belong to the legal user identity information corresponding to the target in-vehicle client, the in-vehicle server does not need to perform a step of determining the target in-vehicle client according to the identifier information of the target in-vehicle client and determining the target upgrade information according to the identifier information of the requested upgrade information.

Of course, other implementations may be adopted for the step S201, which is not limited in the embodiment of the present application.

Step S202: transmitting an upgrade indication message to the target in-vehicle client by an over-the-air, OTA, technology, where the upgrade indication message includes the target upgrade information, so that the target in-vehicle client performs an upgrade according to the target upgrade information.

In this step, illustratively, if the target upgrade information includes the software information, the upgrade indication message may be transmitted to the target in-vehicle client through the SOTA technology; if the target upgrade information includes the firmware information, the upgrade indication message may be transmitted to the target in-vehicle client through the FOTA technology; if the target upgrade information includes the parameter information, the upgrade indication message may be transmitted to the target in-vehicle client through the COTA technology; if the target upgrade information includes the data information, the upgrade indication message may be transmitted to the target in-vehicle client through the DOTA technology.

It should be noted that, if the target upgrade information includes one or more of the software information, the firmware information, the parameter information, and the data information, correspondingly one or more of the foregoing SOTA, FOTA, COTA, and DOTA technologies are adopted to transmit the upgrade indication message to the target in-vehicle client, which is not described here again in this embodiment.

Further, in the above step S201, when the first possible implementation is adopted (that is, the in-vehicle server actively initiates an information upgrade for the target in-vehicle client), in order to ensure accurate delivery of appropriate upgrade information to an appropriate in-vehicle client, in this step, the in-vehicle server determines whether the determined target upgrade information and the target in-vehicle client are correct; if it is determined that the target upgrade information and the target in-vehicle client are correct, the upgrade indication message is transmitted to the target in-vehicle client by the over-the-air, OTA, technology; and if it is determined that the target upgrade information and/or the target in-vehicle client is incorrect, the step of transmitting the upgrade indication message to the target in-vehicle client by the over-the-air, OTA, technology is not performed. It can be seen that it is possible to accurately transmit the appropriate target upgrade information to the appropriate target in-vehicle client, and improve upgrade efficiency.

In the embodiment of the present application, the in-vehicle server determines a target in-vehicle client to be upgraded and acquires target upgrade information; further, the in-vehicle server transmits an upgrade indication message carrying the target upgrade information to the target in-vehicle client by an over-the-air, OTA, technology, so that the target in-vehicle client performs an upgrade according to the target upgrade information. It can be seen that the effective information upgrading of the in-vehicle client in the automatic driving vehicle is achieved, and the user experience of the in-vehicle client and/or the automatic driving vehicle is improved.

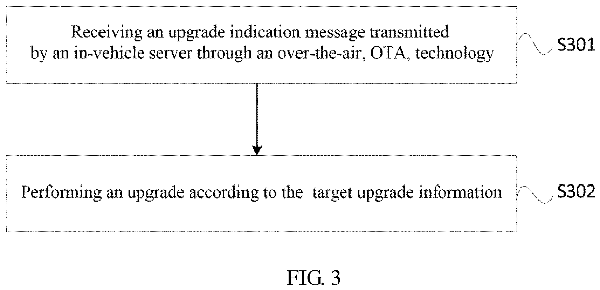

FIG. 3 is a schematic flowchart diagram of an information upgrading method for an automatic driving vehicle according to another embodiment of the present application. The executive body of this embodiment may be a target in-vehicle client or an information upgrading apparatus for an automatic driving vehicle located in the target in-vehicle client and the apparatus can be implemented by software and/or hardware (for convenience of description, this embodiment is illustrated by taking the executive body being the target in-vehicle client as an example). As shown in FIG. 3, on the basis of the foregoing embodiment, the information upgrading method for an automatic driving vehicle provided in this embodiment may include:
Step S301: receiving an upgrade indication message transmitted by an in-vehicle server through an over-the-air, OTA, technology.

In this step, the target in-vehicle client receives the upgrade indication message transmitted by the in-vehicle server through the over-the-air, OTA, technology, where the upgrade indication message includes target upgrade information. Of course, other information may be included in the upgrade indication message, which is not limited in the embodiment of the present application.

Illustratively, if the target upgrade information includes the software information, the target in-vehicle client receives the upgrade indication message transmitted by the in-vehicle server through the SOTA technology; if the target upgrade information includes the firmware information, the target in-vehicle client receives the upgrade indication message transmitted by the in-vehicle server through the FOTA technology; if the target upgrade information includes the parameter information, the target in-vehicle client receives the upgrade indication message transmitted by the in-vehicle server through the COTA technology; and if the target upgrade information includes the data information, the target in-vehicle client receives the upgrade indication message transmitted by the in-vehicle server through the DOTA technology.

It should be noted that, if the target upgrade information includes one or more of the software information, the firmware information, the parameter information, and the data information, correspondingly, the target in-vehicle client receives the upgrade indication message transmitted by the in-vehicle server through one or more of the foregoing SOTA, FOTA, COTA, and DOTA technologies, which are not described here in the embodiment of the present application.

Step S302: performing an upgrade according to the target upgrade information.

In this step, the target in-vehicle client performs the upgrade according to the received target upgrade information. Illustratively, if the target upgrade information includes one or more of the software information, the parameter information, or the data information, the target in-vehicle client updates the software in the in-vehicle client according to the target upgrade information; if the target upgrade information includes one or more of the firmware information, the parameter information, or the data information, the target in-vehicle client upgrades the hardware in the in-vehicle client according to the target upgrade information.

Optionally, when the information upgrade for the target in-vehicle client is actively initiated by the in-vehicle server, after receiving the upgrade indication message transmitted by the in-vehicle server through the OTA technology, the target in-vehicle client may determine whether it is necessary to perform the upgrade according to the target upgrade information; if it is determined that it is necessary to perform the upgrade, the upgrade is performed according to the target upgrade information; if it is determined that it is not necessary to perform the upgrade, the step of performing an upgrade according to the target upgrade information is not required, and the user experience of the automatic driving vehicle and/or the in-vehicle client is further improved.

In the embodiment of the present application, the target in-vehicle client receives an upgrade indication message transmitted by an in-vehicle server through an over-the-air, OTA, technology; further, the target in-vehicle client performs an upgrade according to the target upgrade information. It can be seen that the effective information upgrading of the in-vehicle client in the automatic driving vehicle is achieved, and the user experience of the in-vehicle client and/or the automatic driving vehicle is improved.

Optionally, when the target in-vehicle client actively initiates the information upgrade, the target in-vehicle client may further transmit an upgrade request message to the in-vehicle server before receiving the upgrade indication message transmitted by the in-vehicle server through the over-the-air, OTA, technology. The upgrade request message includes identifier information of the target in-vehicle client and identifier information of requested upgrade information, so that the in-vehicle server determines the target in-vehicle client according to the identifier information of the target in-vehicle client, and determines the target upgrade information according to the identifier information of the requested upgrade information, so as to transmit the upgrade indication message carrying the target upgrade information to the target in-vehicle client through the over-the-air, OTA, technology.

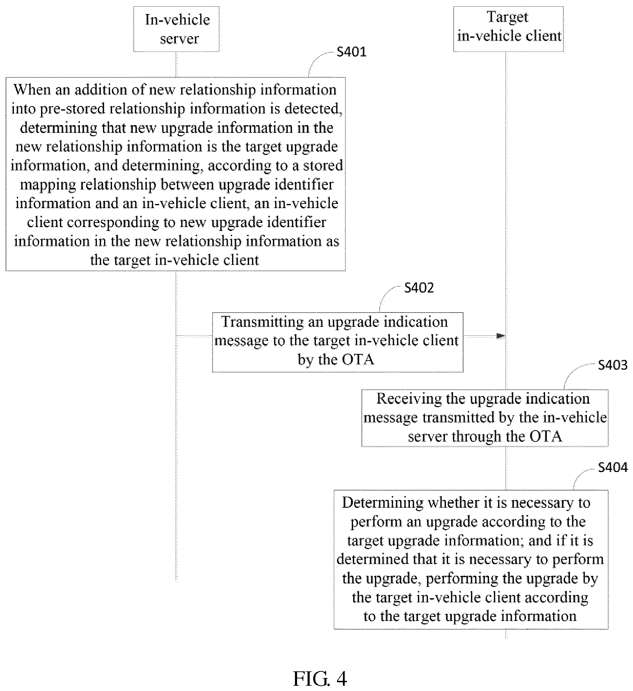

FIG. 4 is a schematic flowchart diagram of an information upgrading method for an automatic driving vehicle according to another embodiment of the present application. In the embodiment of the present application, the information upgrading method for an automatic driving vehicle provided in this embodiment is introduced in combination with the in-vehicle server side and the target in-vehicle client side. As shown in FIG. 4, on the basis of the foregoing embodiments, the information upgrading method for an automatic driving vehicle provided in this embodiment may include:
Step S401: when an addition of new relationship information into pre-stored relationship information is detected, by the in-vehicle server, determining that new upgrade information in the new relationship information is the target upgrade information, and determining, according to a stored mapping relationship between upgrade identifier information and an in-vehicle client, an in-vehicle client corresponding to new upgrade identifier information in the new relationship information as the target in-vehicle client.

Illustratively, the pre-stored relationship information includes a mapping relationship between different upgrade identifier information and different upgrade information, and the new relationship information includes a mapping relationship between new upgrade identifier information and new upgrade information.

Step S402: transmitting, by the in-vehicle server, an upgrade indication message to the target in-vehicle client though the OTA technology.

Illustratively, the upgrade indication message includes the target upgrade information, so that the target in-vehicle client performs an upgrade according to the target upgrade information.

Step S403: receiving, by the target in-vehicle client, the upgrade indication message transmitted by the in-vehicle server through the OTA technology.

Step S404: by the target in-vehicle client, determining whether it is necessary to perform an upgrade according to the target upgrade information, and if it is determined that it is necessary to perform the upgrade, performing the upgrade according to the target upgrade information.

In the embodiment of the present application, by the in-vehicle server actively initiating the information upgrade for the target in-vehicle client upon detecting the addition of the new relationship information into the pre-stored relationship information, the information upgrade for the target in-vehicle client in the automatic driving vehicle is effectively realized.

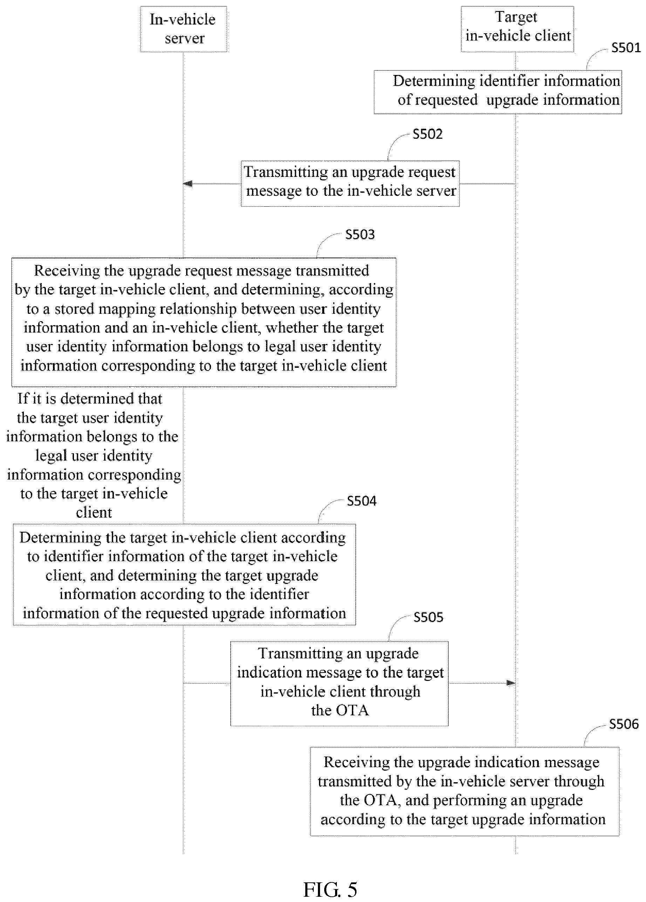

FIG. 5 is a schematic flowchart diagram of an information upgrading method for an automatic driving vehicle according to another embodiment of the present application. In the embodiment of the present application, the information upgrading method for an automatic driving vehicle is introduced in combination with the in-vehicle server side and the target in-vehicle client side. As shown in FIG. 5, on the basis of the foregoing embodiments, the information upgrading method for an automatic driving vehicle provided in this embodiment may include:
Step S501: determining identifier information of requested upgrade information by the target in-vehicle client.
Step S502: transmitting, by the target in-vehicle client, an upgrade request message to the in-vehicle server.

Illustratively, the upgrade request message includes: identifier information of the target in-vehicle client, identifier information of the requested upgrade information, and target user identity information.

Step S503: by the in-vehicle server, receiving the upgrade request message transmitted by the target in-vehicle client, and determining, according to a stored mapping relationship between user identity information and an in-vehicle client, whether the target user identity information belongs to legal user identity information corresponding to the target in-vehicle client.

In this step, if it is determined that the target user identity information belongs to the legal user identity information corresponding to the target in-vehicle client, step S504 is performed; and if it is determined that the target user identity information does not belong to the legal user identity information corresponding to the target in-vehicle client, then the process ends.

Step S504: by the in-vehicle server, determining the target in-vehicle client according to the identifier information of the target in-vehicle client, and determining the target upgrade information according to the identifier information of the requested upgrade information.

Step S505: transmitting, by the in-vehicle server, an upgrade indication message to the target in-vehicle client through an over-the-air, OTA, technology.

Illustratively, the upgrade indication message includes the target upgrade information.

Step S506: by the target in-vehicle client, receiving the upgrade indication message transmitted by the in-vehicle server through the OTA technology, and performing an upgrade according to the target upgrade information.

In the embodiment of the present application, by the target in-vehicle client transmitting the upgrade request message to the in-vehicle server to actively initiate the information upgrade, the information upgrade for the target in-vehicle client in the automatic driving vehicle is effectively realized.

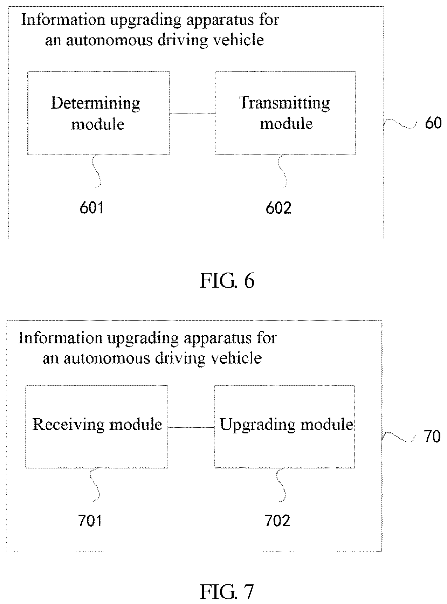

FIG. 6 is a schematic structural diagram of an information upgrading apparatus for an autonomous driving vehicle according to an embodiment of the present application. As shown in FIG. 6, an information upgrading apparatus 60 for an autonomous driving vehicle provided by the embodiment of the present application may include: a determining module 601 and a transmitting module 602.

The determining module 601 is configured to determine a target in-vehicle client to be upgraded and acquire target upgrade information.

The transmitting module 602 is configured to transmit an upgrade indication message to the target in-vehicle client by an over-the-air, OTA, technology, where the upgrade indication message includes the target upgrade information, so that the target in-vehicle client performs an upgrade according to the target upgrade information.

In a possible implementation, the determining module 601 is specifically configured to:
when an addition of new relationship information into pre-stored relationship information is detected, determine that new upgrade information is the target upgrade information, where the pre-stored relationship information includes a mapping relationship between different upgrade identifier information and different upgrade information, the new relationship information includes a mapping relationship between new upgrade identifier information and the new upgrade information; and
determine an in-vehicle client corresponding to the new upgrade identifier information as the target in-vehicle client according to a stored mapping relationship between the upgrade identifier information and an in-vehicle client.

In a possible implementation, the transmitting module 602 is specifically configured to:
determine whether the determined target upgrade information and the target in-vehicle client are correct; and
if it is determined that the target upgrade information and the target in-vehicle client are correct, transmit the upgrade indication message to the target in-vehicle client by the over-the-air, OTA, technology.

In a possible implementation, the determining module 601 includes:
a receiving unit, configured to receive an upgrade request message transmitted by the target in-vehicle client, where the upgrade request message includes: identifier information of the target in-vehicle client and identifier information of requested upgrade information; and
a determining unit, configured to determine the target in-vehicle client according to the identifier information of the target in-vehicle client, and determine the target upgrade information according to the identifier information of the requested upgrade information.

In a possible implementation, the determining unit is specifically configured to:
determine, according to pre-stored relationship information, whether upgrade information corresponding to the identifier information of the requested upgrade information exists, where the pre-stored relationship information includes a mapping relationship between different upgrade identifier information and different upgrade information; and
if the upgrade information corresponding to the identifier information of the requested upgrade information exists, determine that the upgrade information corresponding to the identifier information of the requested upgrade information is the target upgrade information.

In a possible implementation, if the upgrade request message further includes target user identity information, the determining unit is specifically configured to:
determine, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determine the target in-vehicle client according to the identifier information of the target in-vehicle client, and determine the target upgrade information according to the identifier information of the requested upgrade information.

The information upgrading apparatus for an automatic driving vehicle provided in this embodiment is configured to perform the technical solutions with respect to the in-vehicle server in the above embodiments of the information upgrading method for an automatic driving vehicle of the present application, and the technical principles and technical effects thereof are similar, and details are not described here again.

FIG. 7 is a schematic structural diagram of an information upgrading apparatus for an autonomous driving vehicle according to another embodiment of the present application. As shown in FIG. 7, an information upgrading apparatus 70 for an autonomous driving vehicle provided by the embodiment of the present application may include: a receiving module 701 and an upgrading module 702.

The receiving module 701 is configured to receive an upgrade indication message transmitted by an in-vehicle server through an over-the-air, OTA, technology, where the upgrade indication message includes target upgrade information.

The upgrading module 702 is configured to perform an upgrade according to the target upgrade information.

In a possible implementation, the upgrade module 702 is specifically configured to:
determine whether it is necessary to perform the upgrade according to the target upgrade information; and
if it is determined that it is necessary to perform the upgrade, perform the upgrade according to the target upgrade information.

In a possible implementation, the information upgrading apparatus 70 for an autonomous driving vehicle includes:
a transmitting module, configured to transmit an upgrade request message to the in-vehicle server, where the upgrade request message includes: identifier information of a target in-vehicle client and identifier information of a requested upgrade information.

The information upgrading apparatus for an automatic driving vehicle provided in this embodiment is configured to perform the technical solutions with respect to the target in-vehicle client in the embodiments of the information upgrading method for an automatic driving vehicle of the present application, and the technical principles and technical effects thereof are similar, and details are not described here again.

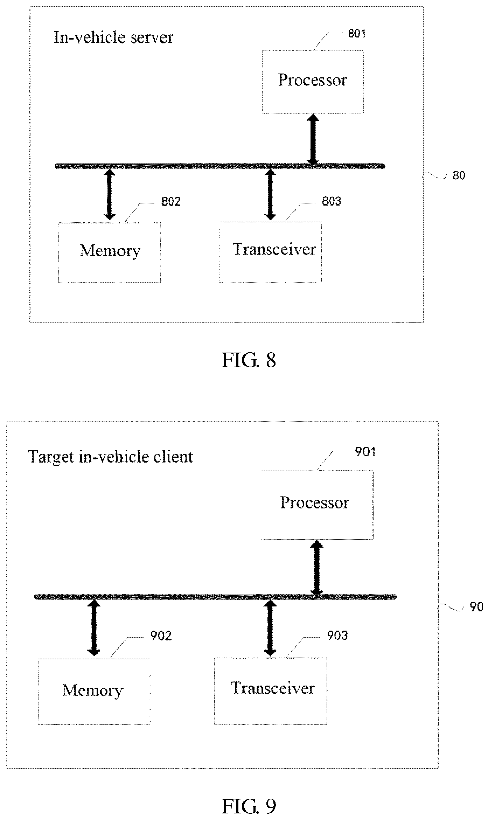

FIG. 8 is a schematic structural diagram of an in-vehicle server according to an embodiment of the present application. As shown in FIG. 8, an in-vehicle server 80 provided by the embodiment of the present application may include a processor 801 and a memory 802. Optionally, a transceiver 803 can also be included, and the transceiver 803 is configured to communicate with other devices. The memory 802 is configured to store a program instruction. The processor 801 is configured to invoke the program instruction stored in the memory 802, so that the in-vehicle server 80 performs the technical solutions with respect to the in-vehicle server in the above-described embodiments of the information upgrading method for an automatic driving vehicle according to the present application. The technical principles and technical effects thereof are similar, and will not be described here.

FIG. 9 is a schematic structural diagram of an in-vehicle client according to an embodiment of the present application. Illustratively, the in-vehicle client provided by the embodiment of the present application may be a target in-vehicle client. As shown in FIG. 9, a target in-vehicle client 90 provided by the embodiment of the present application may include a processor 901, a memory 902, and a transceiver 903. The transceiver 903 is configured to communicate with other devices; the memory 902 is configured to store a program instruction; the processor 901 is configured to invoke the program instruction stored in the memory 902, so that the target in-vehicle client 90 performs the technical solutions with respect to the in-vehicle client in the above-described embodiments of the information upgrading method for an automatic driving vehicle according to the present application. The technical principles and technical effects thereof are similar, and will not be described here.

An embodiment of the present application further provides a computer readable storage medium, where the computer readable storage medium stores a computer program, and the computer program causes an in-vehicle server to execute the technical solutions with respect to the in-vehicle server in the embodiments of the information upgrading method for an automatic driving vehicle of the present application. The technical principles and technical effects thereof are similar, and will not be described here.

An embodiment of the present application further provides a chip for running an instruction, and the chip is used to implement the technical solutions with respect to the in-vehicle server in the embodiments of the information upgrading method for an automatic driving vehicle of the present application, and the technical principles and technical effects thereof are similar and will not be described here.

An embodiment of the present application further provides a program product, where the program product includes a computer program, the computer program is stored in a storage medium, and at least one processor can read the computer program from the storage medium, and when the at least one processor executes the computer program, the technical solutions with respect to the in-vehicle server in the embodiments of the information upgrading method for an automatic driving vehicle of the present application can be implemented, and the technical principles and technical effects thereof are similar, and details are not described here again.

An embodiment of the present application further provides a computer readable storage medium, where the computer readable storage medium stores a computer program which causes an in-vehicle client to execute the technical solutions with respect to the target in-vehicle client in the embodiments of the information upgrading method for an automatic driving vehicle of the present application. The technical principles and technical effects thereof are similar, and will not be described here.

An embodiment of the present application further provides a chip for running an instruction, where the chip is used to execute the technical solutions with respect to the target in-vehicle client in the embodiments of the information upgrading method for an automatic driving vehicle of the present application, and the technical principles and technical effects thereof are similar, and details are not described here again.

An embodiment of the present application further provides a program product, where the program product includes a computer program, the computer program is stored in a storage medium, and at least one processor can read the computer program from the storage medium, and when the at least one processor executes the computer program, the technical solutions with respect to the target in-vehicle client in the embodiments of the information upgrading method for an automatic driving vehicle of the present application may be implemented, and the technical principles and technical effects thereof are similar, and details are not described here again.

It will be understood by those skilled in the art that, in various embodiments of the present application, the size of the sequence numbers in the above processes does not mean an order of execution, and the order of execution of each process should be determined by its function and internal logic, and should not constitute any limitation to the implementation process of the embodiment of the present application.

Those skilled in the art will appreciate that all or part of the steps to implement the various method embodiments described above may be accomplished by hardware associated with the program instructions. The aforementioned program can be stored in a computer readable storage medium. The program, when executed, performs the steps including the foregoing method embodiments; and the foregoing storage medium includes various media that can store program codes, such as a ROM, a RAM, a magnetic disk, or an optical disk.

It should be noted that the above embodiments are only used to illustrate the technical solutions in the embodiments of the present application and shall not be construed as limitation; although the present application has been described in detail with reference to the foregoing embodiments, those skilled in the art will understand that the technical solutions described in the foregoing embodiments may be modified, or some or all of the technical features may be equivalently substituted; and the modifications or substitutions do not deviate the corresponding technical features from the scope of the technical solutions of the embodiments of the present application.

## Claims

1. An information upgrading method for an automatic driving vehicle, comprising:
determining a target in-vehicle client to be upgraded and acquiring target upgrade information; and
transmitting an upgrade indication message to the target in-vehicle client by an over-the-air, OTA, technology, wherein the upgrade indication message comprises the target upgrade information, so that the target in-vehicle client performs an upgrade according to the target upgrade information.

2. The method according to claim 1, wherein the determining a target in-vehicle client to be upgraded and acquiring target upgrade information comprises:
when an addition of new relationship information into pre-stored relationship information is detected, determining that new upgrade information is the target upgrade information, wherein the pre-stored relationship information comprises a mapping relationship between different upgrade identifier information and different upgrade information, and the new relationship information comprises a mapping relationship between new upgrade identifier information and the new upgrade information; and
determining an in-vehicle client corresponding to the new upgrade identifier information as the target in-vehicle client according to a stored mapping relationship between the upgrade identifier information and an in-vehicle client.

3. The method according to claim 1 or 2, wherein the transmitting an upgrade indication message to the target in-vehicle client by an over-the-air, OTA, technology comprises:
determining whether the determined target upgrade information and the target in-vehicle client are correct; and
if it is determined that the target upgrade information and the target in-vehicle client are correct, transmitting the upgrade indication message to the target in-vehicle client by the over-the-air, OTA, technology.

4. The method according to claim 1, wherein the determining a target in-vehicle client to be upgraded and acquiring target upgrade information comprises:
receiving an upgrade request message transmitted by the target in-vehicle client, wherein the upgrade request message comprises identifier information of the target in-vehicle client and identifier information of requested upgrade information; and
determining the target in-vehicle client according to the identifier information of the target in-vehicle client, and determining the target upgrade information according to the identifier information of the requested upgrade information;
wherein the determining the target upgrade information according to the identifier information of the requested upgrade information comprises:
determining, according to pre-stored relationship information, whether upgrade information corresponding to the identifier information of the requested upgrade information exists, wherein the pre-stored relationship information comprises a mapping relationship between different upgrade identifier information and different upgrade information; and
if the upgrade information corresponding to the identifier information of the requested upgrade information exists, determining that the upgrade information corresponding to the identifier information of the requested upgrade information is the target upgrade information.

5. The method according to claim 4, wherein if the upgrade request message further comprises target user identity information, the determining the target in-vehicle client according to the identifier information of the target in-vehicle client, and determining the target upgrade information according to the identifier information of the requested upgrade information comprises:
determining, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determining the target in-vehicle client according to the identifier information of the target in-vehicle client, and determining the target upgrade information according to the identifier information of the requested upgrade information.

6. An information upgrading method for an automatic driving vehicle, comprising:
receiving an upgrade indication message transmitted by an in-vehicle server through an over-the-air, OTA, technology, wherein the upgrade indication message comprises target upgrade information; and
performing an upgrade according to the target upgrade information.

7. The method according to claim 6, wherein before the receiving an upgrade indication message transmitted by an in-vehicle server through an over-the-air, OTA, technology, the method further comprises:
transmitting an upgrade request message to the in-vehicle server, wherein the upgrade request message comprises: identifier information of a target in-vehicle client and identifier information of requested upgrade information.

8. An in-vehicle server, comprising: a memory, a processor, and a transceiver, wherein
the memory is configured to store a program instruction; and
the processor is configured to invoke the program instruction stored in the memory to implement following steps:
determining a target in-vehicle client to be upgraded and acquiring target upgrade information; and
controlling the transceiver to transmit an upgrade indication message to the target in-vehicle client by an over-the-air, OTA, technology, wherein the upgrade indication message comprises the target upgrade information, so that the target in-vehicle client performs an upgrade according to the target upgrade information.

9. The in-vehicle server according to claim 8, wherein the processor is specifically configured to:
when an addition of new relationship information into pre-stored relationship information is detected, determine that new upgrade information is the target upgrade information, wherein the pre-stored relationship information comprises a mapping relationship between different upgrade identifier information and different upgrade information, and the new relationship information comprises a mapping relationship between new upgrade identifier information and the new upgrade information; and
determine an in-vehicle client corresponding to the new upgrade identifier information as the target in-vehicle client according to a stored mapping relationship between the upgrade identifier information and an in-vehicle client.

10. The in-vehicle server according to claim 8 or 9, wherein the processor is specifically configured to: determine whether the determined target upgrade information and the target in-vehicle client are correct; and
if the processor determines that the target upgrade information and the target in-vehicle client are correct, the transceiver is specifically configured to: transmit the upgrade indication message to the target in-vehicle client by the over-the-air, OTA, technology.

11. The in-vehicle server according to claim 8, wherein the transceiver is further configured to receive an upgrade request message transmitted by the target in-vehicle client, wherein the upgrade request message comprises: identifier information of the target in-vehicle client and identifier information of requested upgrade information; and
the processor is specifically configured to: determine the target in-vehicle client according to the identifier information of the target in-vehicle client, and determine the target upgrade information according to the identifier information of the requested upgrade information;
determine, according to pre-stored relationship information, whether upgrade information corresponding to the identifier information of the requested upgrade information exists, wherein the pre-stored relationship information comprises a mapping relationship between different upgrade identifier information and different upgrade information; and
if the upgrade information corresponding to the identifier information of the requested upgrade information exists, determine that the upgrade information corresponding to the identifier information of the requested upgrade information is the target upgrade information.

12. The in-vehicle server according to claim 11, wherein if the upgrade request message further comprises target user identity information, the processor is specifically configured to:
determine, according to a stored mapping relationship between user identity information and an in-vehicle client, whether the target user identity information belongs to legal user identity information corresponding to the target in-vehicle client; and
if it is determined that the target user identity information belongs to the legal user identity information corresponding to the target in-vehicle client, determine the target in-vehicle client according to the identifier information of the target in-vehicle client, and determine the target upgrade information according to the identifier information of the requested upgrade information.

13. An in-vehicle client, wherein the in-vehicle client is a target in-vehicle client, and the target in-vehicle client comprises: a memory, a processor, and a transceiver;
the memory is configured to store a program instruction; and
the processor is configured to invoke the program instruction stored in the memory to implement following steps:
controlling the transceiver to receive an upgrade indication message transmitted by an in-vehicle server through an over-the-air, OTA, technology, wherein the upgrade indication message comprises target upgrade information; and
performing an upgrade according to the target upgrade information.

14. The in-vehicle client according to claim 13, wherein the processor is specifically configured to:
determine whether it is necessary to perform an upgrade according to the target upgrade information; and
if it is determined that it is necessary to perform the upgrade, performing the upgrade according to the target upgrade information.

15. The in-vehicle client according to claim 13, wherein the transceiver is further configured to transmit an upgrade request message to the in-vehicle server, wherein the upgrade request message comprises: identifier information of the target in-vehicle client and identifier information of requested upgrade information.
